(19) Europäisches Patentamt
European Patent Office
Office européen des brevets

(11) **EP 4 675 205 A1**

(12) **EUROPEAN PATENT APPLICATION**

(43) Date of publication:
**07.01.2026 Bulletin 2026/02**

(21) Application number: **24212911.2**

(22) Date of filing: **14.11.2024**

(51) International Patent Classification (IPC):
**F25B 49/00** *(2006.01)*

(52) Cooperative Patent Classification (CPC):
**F25B 49/005;** F25B 2500/06; F25B 2500/26;
F25B 2700/15; F25B 2700/151; Y02B 30/70

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **05.07.2024 CN 202410902301**

(71) Applicants:
• **Xiaomi Technology (Wuhan) Co., Ltd.**
**Wuhan, Hubei 430000 (CN)**
• **Xiaomi Smart Appliances (Wuhan) Co., Ltd.**
**Wuhan, Hubei 430073 (CN)**
• **Beijing Xiaomi Mobile Software Co., Ltd.**
**Beijing 100085 (CN)**

(72) Inventors:
• **ZHOU, Shufeng**
**Wuhan, Hubei 430000 (CN)**
• **WU, Junhong**
**Wuhan, Hubei 430000 (CN)**
• **PENG, Guangqian**
**Wuhan, Hubei 430000 (CN)**
• **LI, Chengbin**
**Wuhan, Hubei 430000 (CN)**
• **YU, Lunwang**
**Wuhan, Hubei 430000 (CN)**

(74) Representative: **Stöckeler, Ferdinand et al
Schoppe, Zimmermann, Stöckeler
Zinkler, Schenk & Partner mbB
Patentanwälte
Radlkoferstrasse 2
81373 München (DE)**

(54) **METHOD AND APPARATUS FOR CONTROLLING AIR CONDITIONER, ELECTRONIC DEVICE, AIR CONDITIONER, STORAGE MEDIUM AND PRODUCT**

(57) The invention relates to a method and apparatus for controlling an air conditioner, an electronic device, an air conditioner, a storage medium and a product, and relates to the field of air conditioners. The method provides that a power-on duration of an air conditioner indoor unit is determined (S11), a refrigerant circulation state of the air conditioner is determined (S12) based on a current change situation of an air conditioner outdoor unit and a current change situation of an air conditioner compressor in a case that the power-on duration is less than a first preset duration, and an abnormity protection instruction for controlling the air conditioner compressor to perform a halt protection is generated (S13) in a case that the refrigerant circulation state is abnormal.

Fig. 1

Determine a power-on duration of an air conditioner indoor unit — S11

Determine a refrigerant circulation state of an air conditioner based on a current change situation of an air conditioner outdoor unit and a current change situation of an air conditioner compressor in a case that the power-on duration is less than a first preset duration — S12

Generate an abnormity protection instruction in a case that the refrigerant circulation state of the air conditioner is abnormal, where the abnormity protection instruction is used to control the air conditioner compressor to perform a halt protection — S13

EP 4 675 205 A1

# Description

## TECHNICAL FIELD

The invention relates to the field of air conditioners, in particular to a method and apparatus for controlling an air conditioner, an electronic device, an air conditioner, a storage medium and a product.

## BACKGROUND OF THE INVENTION

With development of an air conditioner technology, more and more air conditioners are needed in people's lives. Compared with other electronic devices, safety of the air conditioners is high.

## SUMMARY OF THE INVENTION

In order to solve the problem in the related art, the invention provides a method and apparatus for controlling an air conditioner, an electronic device, an air conditioner, a storage medium and a product.
According to a first aspect of examples of the invention, a method for controlling an air conditioner is provided and includes:

 determining a power-on duration of an air conditioner indoor unit;

 determining a refrigerant circulation state of the air conditioner based on a current change situation of an air conditioner outdoor unit and a current change situation of an air conditioner compressor in a case that the power-on duration is less than a first preset duration; and

 generating an abnormity protection instruction in a case that the refrigerant circulation state is abnormal, where the abnormity protection instruction is used to control the air conditioner compressor to perform a halt protection.

Optionally, determining the refrigerant circulation state of the air conditioner based on the current change situation of the air conditioner outdoor unit and the current change situation of the air conditioner compressor includes:

 determining the refrigerant circulation state as abnormal refrigerant circulation in a case that an absolute value of an absolute change value of a current of the air conditioner outdoor unit at a first moment and a second moment is greater than or equal to a preset current threshold and an absolute value of a relative change rate of a current of the compressor at a third moment and a fourth moment is greater than or equal to a preset proportion threshold;

where an interval between the first moment and the second moment is a second preset duration, and an interval between the third moment and the fourth moment is a third preset duration.

Optionally, determining the refrigerant circulation state of the air conditioner based on the current change situation of the air conditioner outdoor unit and the current change situation of the air conditioner compressor includes:

 determining running stability of the air conditioner; and

 determining the refrigerant circulation state of the air conditioner based on the current change situation of the air conditioner outdoor unit and the current change situation of the air conditioner compressor in a case that the air conditioner runs stably.

Optionally, determining the running stability of the air conditioner includes:

 determining that the air conditioner runs stably in a case that a preset condition is met;

 where the preset condition includes one or more following conditions:

  a fluctuation of a running frequency of the air conditioner compressor within a fourth preset duration is less than a preset frequency threshold;

  a fluctuation of a rotation speed of an internal fan of the air conditioner within a fifth preset duration is less than a first preset rotation speed threshold;

  a fluctuation of a rotation speed of an external fan of the air conditioner within a sixth preset duration is less than a second preset rotation speed threshold; or

  a fluctuation of a variation range of an alternating current voltage of the air conditioner outdoor unit within a seventh preset duration is less than a preset voltage threshold.

Optionally, determining the refrigerant circulation state of the air conditioner based on the current change situation of the air conditioner outdoor unit and the current change situation of the air conditioner compressor includes:

 obtaining an inner tube temperature, an inner loop temperature, an outer tube temperature and an outer loop temperature corresponding to a starting-up moment of the air conditioner outdoor unit; and

determining the refrigerant circulation state of the air conditioner based on the current change situation of the air conditioner outdoor unit and the current change situation of the air conditioner compressor in a case of determining that a preset temperature difference condition is met based on the inner tube temperature, the inner loop temperature, the outer tube temperature and the outer loop temperature.

Optionally, determining the refrigerant circulation state of the air conditioner based on the current change situation of the air conditioner outdoor unit and the current change situation of the air conditioner compressor in the case of determining that the preset temperature difference condition is met based on the inner tube temperature, the inner loop temperature, the outer tube temperature and the outer loop temperature includes:
determining the refrigerant circulation state of the air conditioner based on the current change situation of the air conditioner outdoor unit and the current change situation of the air conditioner compressor in cases of determining that the preset temperature difference condition is met based on the inner tube temperature, the inner loop temperature, the outer tube temperature and the outer loop temperature and determining that a starting-up duration of the air conditioner compressor reaches an eighth preset duration.

According to a second aspect of examples of the invention, a method for controlling an air conditioner is provided, performed by an air conditioner outdoor unit, including:

receiving a power-on duration parameter sent by an air conditioner indoor unit;

determining a power-on duration of the air conditioner indoor unit according to the power-on duration parameter, where the power-on duration parameter is sent continuously within a ninth preset duration after the air conditioner indoor unit is powered on;

determining a refrigerant circulation state of the air conditioner based on a current change situation of the air conditioner outdoor unit and a current change situation of an air conditioner compressor in a case that the power-on duration is less than a first preset duration;

generating an abnormity protection instruction in a case that the refrigerant circulation state is abnormal; and

controlling the air conditioner compressor to perform a halt protection based on the abnormity protection instruction.

According to a third aspect of examples of the invention, an apparatus for controlling an air conditioner is provided, including:

a first determining module, configured to determine a power-on duration of an air conditioner indoor unit;

a second determining module, configured to determine a refrigerant circulation state of the air conditioner based on a current change situation of an air conditioner outdoor unit and a current change situation of an air conditioner compressor in a case that the power-on duration is less than a first preset duration; and

an instruction generating module, configured to generate an abnormity protection instruction in a case that the refrigerant circulation state is abnormal, where the abnormity protection instruction is used to control the air conditioner compressor to perform a halt protection.

According to a fourth aspect of examples of the invention, an apparatus for controlling an air conditioner is provided, including:

a receiving module, configured to receive a power-on duration parameter sent by an air conditioner indoor unit;

a third determining module, configured to determine a power-on duration of the air conditioner indoor unit according to the power-on duration parameter, where the power-on duration parameter is sent continuously within a ninth preset duration after the air conditioner indoor unit is powered on;

a fourth determining module, configured to determine a refrigerant circulation state of the air conditioner based on a current change situation of an air conditioner outdoor unit and a current change situation of an air conditioner compressor in a case that the power-on duration is less than a first preset duration;

an instruction generating module, configured to generate an abnormity protection instruction in a case that the refrigerant circulation state is abnormal; and

a controlling module, configured to control the air conditioner compressor to perform a halt protection based on the abnormity protection instruction.

According to a fifth aspect of examples of the invention, an electronic device is provided, including:

a first processor; and

a first memory configured to store an instruction executable by the first processor;

where the first processor is configured to implement steps of the method for controlling the air conditioner provided by the first aspect or the second aspect during performing.

According to a sixth aspect of examples of the invention, an air conditioner is provided and includes an air conditioner outdoor unit, and the air conditioner outdoor unit includes:

a second processor; and

a second memory configured to store an instruction executable by the second processor;

where the second processor is configured to implement steps of the method for controlling the air conditioner provided by the first aspect or the second aspect during performing.

According to a seventh aspect of examples of the invention, a non-transitory computer-readable storage medium is provided and stores one or more computer programs configured to be executed by one or more processors of a processing device, the one or more programs including instructions which, when executed by the processing device, cause the processing device to carry out the method for controlling the air conditioner provided by the first aspect or the second aspect of the invention.

According to an eighth aspect of examples of the invention, a computer program product is provided, and includes instructions, where, when executed on at least one processor of a processing device, cause the processing device to carry out the method for controlling the air conditioner provided by the first aspect or the second aspect of the invention.

Technical solutions provided by the examples of the invention may include the following beneficial effects.

In the above technical solutions, the power-on duration of the air conditioner indoor unit is determined, the refrigerant circulation state of the air conditioner is determined based on the current change situation of the air conditioner outdoor unit and the current change situation of the air conditioner compressor in the case that the power-on duration is less than the first preset duration, the abnormity protection instruction for controlling the air conditioner compressor to perform the halt protection is generated in the case of determining that the refrigerant circulation state is abnormal, and thus protection control over the air conditioner is performed. The protection control over the air conditioner is implemented by using the current change situation of the air conditioner outdoor unit and the current change situation of the air conditioner compressor convenient to obtain, so that timeliness of air conditioner protection may be improved, and protection control in processes of first installation after sale and relocation installation may be implemented. Besides, judgment for the refrigerant circulation state is performed only when the power-on duration of the air conditioner indoor unit is less than the first preset duration, and thus, unnecessary protection is reduced to a certain degree while the protection control over the air conditioner is performed.

It is to be understood that the above general description and the following detailed description are merely examples and explanatory instead of limiting the invention.

BRIEF DESCRIPTION OF DRAWINGS

Accompanying drawings here, which are incorporated in and constitute a part of the specification, illustrate examples consistent with the invention and, together with the specification, serve to explain principles of the invention.

Fig. 1 is a flowchart of a method for controlling an air conditioner shown according to an example.

Fig. 2 is a flowchart of another method for controlling an air conditioner shown according to an example.

Fig. 3 is a block diagram of an apparatus for controlling an air conditioner shown according to an example.

Fig. 4 is a block diagram of another apparatus for controlling an air conditioner shown according to an example.

Fig. 5 is a block diagram of an electronic device shown according to an example.

DETAILED DESCRIPTION OF THE INVENTION

The examples will be described in detail here, and their instances are represented in the accompanying drawings. Unless otherwise indicated, when the following description refers to the accompanying drawings, the same number in the different accompanying drawings represents the same or similar elements. Implementations described in the following examples do not represent all possible implementations consistent with the invention. Rather, they are merely examples of an apparatus and method consistent with some aspects of the invention as detailed in the appended claims.

It needs to be noted that in the invention, all actions of obtaining signals, information or data are performed in accordance with corresponding data protection regulations and policies of a country where it is located and with permission of an owner of the corresponding apparatus.

In some special cases, there are hidden dangers exist in the air conditioner. Hidden dangers may be brought by leakage of an air conditioner refrigerant, and judgment for fluorine deficiency and a valve cutoff protection function are adopted for solving the problem of refrigerant leakage of an air conditioner at present. However, temperature judgment prevails in these protection functions, judgment can be usually performed only when the air conditioner runs for a long time, and thus problems of long judgment time and poor judgment timeliness exist.

The inventor discovers in a long-term study that at present, a dangerous situation of the air conditioner after sale is that in a case of blockage on a high-pressure side and leakage on a low-pressure side, air is sucked continuously for compressing due to running of a compressor, thus a temperature and a pressure on the high-pressure side increase continuously, and compression ignition explosion occurs when it exceeds an ignition point of a gas-oil mixture.

This kind of security accident after sale usually occurs in the first installation after sale and relocation installation processes, a fault or even an explosion occurs within short time, and the current judgment for fluorine deficiency and valve cutoff protection function cannot achieve timely protection for this situation, so as to bring hidden dangers for a user.

For solving the above technical problem, examples of the invention provide a method and apparatus for controlling an air conditioner, an electronic device, an air conditioner, a storage medium and a program product. It is provided that a power-on duration of an air conditioner indoor unit is determined; a refrigerant circulation state of the air conditioner is determined based on a current change situation of an air conditioner outdoor unit and a current change situation of an air conditioner compressor in a case that the power-on duration is less than a first preset duration; an abnormity protection instruction for controlling the air conditioner compressor to perform a halt protection is generated in a case of determining that the refrigerant circulation state is abnormal, so that protection control over the air conditioner is performed. The protection control over the air conditioner is implemented by using the current change situation of the air conditioner outdoor unit and the current change situation of the air conditioner compressor convenient to obtain, so that the protection control over the air conditioner can be implemented even in an air conditioner after-sale scene, and timeliness of air conditioner protection may be improved; and besides, judgment for the refrigerant circulation state is performed only when the power-on duration of the air conditioner indoor unit is less than the first preset duration, so unnecessary protection is also reduced to a certain degree while the protection control over the air conditioner is performed.

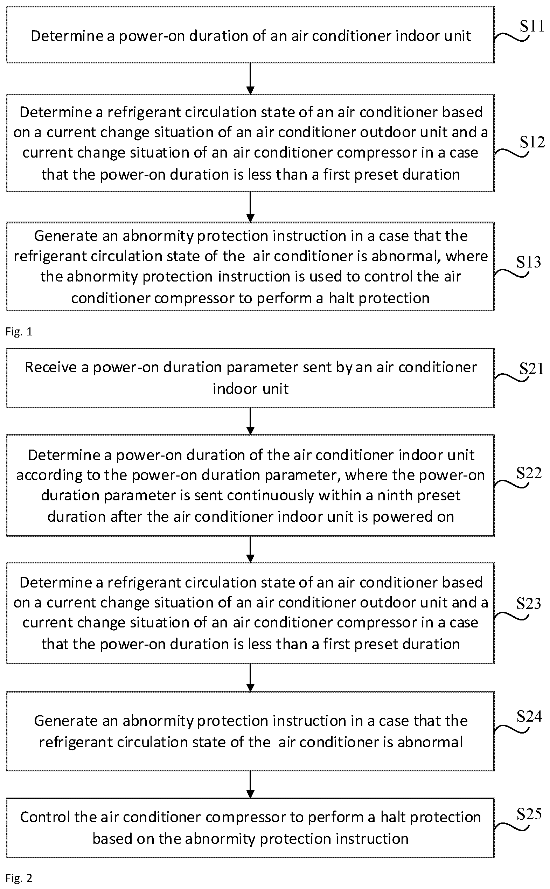

Fig. 1 is a flowchart of a method for controlling an air conditioner shown according to an example. The method may be performed by an electronic device. The electronic device may be, for example, an air conditioner indoor unit, an air conditioner outdoor unit or a smart gateway connected with the air conditioner, etc. As shown in Fig.1, the method includes the following steps.

In step 511, a power-on duration of an air conditioner indoor unit is determined.

In step S12, a refrigerant circulation state of the air conditioner is determined based on a current change situation of an air conditioner outdoor unit and a current change situation of an air conditioner compressor in a case that the power-on duration is less than a first preset duration.

In step S13, an abnormity protection instruction is generated in a case that the refrigerant circulation state is abnormal, where the abnormity protection instruction is used to control the air conditioner compressor to perform a halt protection.

A current of the air conditioner outdoor unit may be understood as a current corresponding to the air conditioner outdoor unit, and a current of the air conditioner compressor may be understood as a current corresponding to the air conditioner compressor.

In examples of the invention, the current of the air conditioner outdoor unit and the current of the air conditioner compressor at different moments may be obtained by the electronic device, so that the current change situation of the air conditioner outdoor unit and the current change situation of the air conditioner compressor may be further obtained according to the current of the air conditioner outdoor unit and the current of the air conditioner compressor at different moments, and then the refrigerant circulation state of the air conditioner may be determined based on the current change situation of the air conditioner outdoor unit and the current change situation of the air conditioner compressor.

It needs to be noted that a user usually powers on the air conditioner but does not pull out a plug of the air conditioner indoor unit, and pulls out the plug of the air conditioner indoor unit only in a case of maintenance after sale or relocation, and thus, in general, the air conditioner indoor unit keeps in a power-on state.

The inventor discovered in a long-term study that if there is refrigerant leakage, a refrigerant is substantially leaked completely after exceeding a certain time, if the refrigerant is leaked completely, occurrence of a fault or even explosion risk is extremely small, so in order to achieve protection control in first installation after sale and relocation installation processes and meanwhile reduce unnecessary protection to a certain degree, in examples of the invention, it may be set that the refrigerant circulation state of the air conditioner may be determined in a case that the power-on duration is less than the first preset duration and then based on the current change situation of the air conditioner outdoor unit and the current change situation of the air conditioner compressor. Otherwise, judgment for the refrigerant circulation state and the subsequent process for generating the abnormity protection instruction may be not performed in a case that the power-on duration of the air conditioner indoor unit is greater than or equal to the first preset duration.

In some implementations, the abnormity protection instruction may also be used for controlling the air conditioner to output a fault prompt so as to warn the user that the air conditioner has a situation of abnormal refrigerant circulation.

In some implementations, the compressor is a device in the air conditioner outdoor unit, so when the electronic device is a device different from the air conditioner outdoor unit, the generated abnormity protection instruction may be sent to the air conditioner outdoor unit, so that the air conditioner outdoor unit controls the air conditioner compressor according to the received abnormity protection instruction to perform the halt protection.

In the above technical solution, it is provided that the power-on duration of the air conditioner indoor unit is determined, the refrigerant circulation state of the air conditioner may be determined based on the current change situation of the air conditioner outdoor unit and the current change situation of the air conditioner compressor in the case that the power-on duration is less than the first preset duration, the abnormity protection instruction for controlling the air conditioner compressor to perform the halt protection is generated in the case of determining that the refrigerant circulation state is abnormal, and thus protection control over the air conditioner is performed. The protection control over the air conditioner is implemented by using the current change situation of the air conditioner outdoor unit and the current change situation of the air conditioner compressor convenient to obtain, so that timeliness of air conditioner protection may be improved, and protection control in processes of first installation after sale and relocation installation may be implemented. Besides, judgment for the refrigerant circulation state is performed only when the power-on duration of the air conditioner indoor unit is less than the first preset duration, and thus, unnecessary protection is reduced to a certain degree while the protection control over the air conditioner is performed.

In some implementations, in step S12, determining the refrigerant circulation state of the air conditioner based on the current change situation of the air conditioner outdoor unit and the current change situation of the air conditioner compressor may include steps:

the refrigerant circulation state is determined as abnormal refrigerant circulation in a case that an absolute value of an absolute change value of the current of the air conditioner outdoor unit at a first moment and a second moment is greater than or equal to a preset current threshold and an absolute value of a relative change rate of the current of the compressor at a third moment and a fourth moment is greater than or equal to a preset proportion threshold;

where an interval between the first moment and the second moment is a second preset duration, and an interval between the third moment and the fourth moment is a third preset duration.

In some implementations, the first moment and the third moment may be the same or not, and the second moment and the fourth moment may be the same or not.

In some implementations, the absolute value of the absolute change value of the current of the air conditioner outdoor unit at the first moment and the second moment is greater than or equal to the preset current threshold, which may be represented by the following formula:

$$|I_{outdoor\ unit\ 1} - I_{outdoor\ unit\ 2}| \geq I_{threshold}$$

where $I_{outdoor\ unit\ 1}$ represents the current of the air conditioner outdoor unit at the first moment, $I_{outdoor\ unit\ 2}$ represents the current of the air conditioner outdoor unit at the second moment, and $I_{threshold}$ represents the preset current threshold.

In some implementations, the absolute value of the relative change rate of the current of the compressor at the third moment and the fourth moment is greater than or equal to the preset proportion threshold, which may be represented by the following formula:

$$\left| \frac{I_{compressor\ 3}}{I_{compressor\ 4}} - 1 \right| \geq P_{threshold}$$

where $I_{compressor\ 3}$ represents the current of the compressor at the third moment, $I_{compressor\ 4}$ represents the current of the compressor at the fourth moment, and $P_{threshold}$ represents the preset proportion threshold.

In examples of the invention, the current change situation of the air conditioner outdoor unit and the current change situation of the air conditioner compressor may start to be obtained in a case of needing to determine the refrigerant circulation state of the air conditioner, for example, in a case that the power-on duration is less than the first preset duration and a detection instruction of the refrigerant circulation state is obtained, and the refrigerant circulation state may be determined as abnormal refrigerant circulation as long as the absolute value of the absolute change value of the current of the air conditioner outdoor unit at the first moment and the second moment is greater than or equal to the preset current threshold and the absolute value of the relative change rate of the current of the compressor at the third moment and the fourth moment is greater than or equal to the preset proportion threshold.

In some implementations, the detection instruction of the refrigerant circulation state may be sent when the air conditioner indoor unit is powered on. In some other implementations, the detection instruction of the refrigerant circulation state may also be sent at any time after the air conditioner indoor unit is powered on.

In an example, the second preset duration may be two seconds, and the third preset duration may also be two seconds.

In some implementations, a value range of the preset current threshold is 0.3 A to 2 A.

In some implementations, a value range of the preset proportion threshold is 3% to 20%.

In some implementations, in step S12, determining the refrigerant circulation state of the air conditioner based on the current change situation of the air conditioner outdoor unit and the current change situation of the air conditioner compressor may include steps:

running stability of the air conditioner is determined; and

the refrigerant circulation state of the air conditioner is determined based on the current change situation of the air conditioner outdoor unit and the current change situation of the air conditioner compressor in a case that the air conditioner runs stably.

In examples of the invention, in order to improve accuracy of the air conditioner protection while timeliness of the air conditioner protection is improved, the running stability of the air conditioner may be determined first, and then the refrigerant circulation state of the air conditioner is further determined based on the current change situation of the air conditioner outdoor unit and the current change situation of the air conditioner compressor in the case of determining that the air conditioner runs stably. Thus, accuracy of determining the refrigerant circulation state of the air conditioner may be improved, and then the accuracy of the air conditioner protection is improved.

In some implementations, the stability of air conditioner running may be judged in aspects of running frequency of the air conditioner compressor, a rotation speed of an internal/external fan, an alternating current voltage of the air conditioner outdoor unit and the like, so as to eliminate influence on a current parameter in cases of frequency increasing and decreasing of the air conditioner compressor, gear shift of the internal and external fans and voltage fluctuation of the air conditioner outdoor unit, and reduce erroneous judgment.

In some implementations, determining the running stability of the air conditioner may include steps:

it is determined that the air conditioner runs stably in a case that a preset condition is met;

where the preset condition includes one or more following conditions:

a fluctuation of a running frequency of the air conditioner compressor within a fourth preset duration is less than a preset frequency threshold;

a fluctuation of a rotation speed of an internal fan of the air conditioner within a fifth preset duration is less than a first preset rotation speed threshold;

a fluctuation of a rotation speed of an external fan of the air conditioner within a sixth preset duration is less than a second preset rotation speed threshold; or

a fluctuation of a variation range of an alternating current voltage of the air conditioner outdoor unit within a seventh preset duration is less than a preset voltage threshold.

The fluctuation may be calculated by a difference between a maximum value and a minimum value.

In examples of the invention, one or more of the above four conditions may be preset for judgment of whether the preset condition is met.

For example, the preset condition is determined to be met by presetting that the fluctuation of the running frequency of the air conditioner compressor within the fourth preset duration is less than the preset frequency threshold, the fluctuation of the rotation speed of the internal fan of the air conditioner within the fifth preset duration is less than the first preset rotation speed threshold, the fluctuation of the rotation speed of the external fan of the air conditioner within the sixth preset duration is less than the second preset rotation speed threshold and the fluctuation of the change range of the alternating current voltage of the air conditioner outdoor unit within the seventh preset duration is less than the preset voltage threshold, and then it is determined that the air conditioner runs stably. It is determined that the air conditioner runs unstably in a case that any of the above four conditions is not met.

For example, the preset condition is determined to be met by presetting that the fluctuation of the running frequency of the air conditioner compressor within the fourth preset duration is less than the preset frequency threshold, the fluctuation of the rotation speed of the internal fan of the air conditioner within the fifth preset duration is less than the first preset rotation speed threshold, and the fluctuation of the rotation speed of the external fan of the air conditioner within the sixth preset duration is less than the second preset rotation speed threshold, and then it is determined that the air conditioner runs stably. It is determined that the air conditioner runs unstably in a case that any of the above three conditions is not met.

In some implementations, a value range of the fourth preset duration may be 1 second to 60 seconds, a value range of the fifth preset duration may be 1 second to 60 seconds, a value range of the sixth preset duration may be 1 second to 60 seconds, and a value range of the seventh preset duration may be 1 second to 60 seconds.

In some implementations, a value range of the preset frequency threshold may be 0.5 Hz to 10 Hz, a value range of the first preset rotation speed threshold may be 20 rpm to 100 rpm, a value range of the second preset rotation speed threshold may be 20 rpm to 100 rpm, and a value range of the preset voltage threshold may be 5% to 30%.

In some implementations, in step S12, determining the refrigerant circulation state of the air conditioner based on the current change situation of the air conditioner outdoor unit and the current change situation of the air conditioner compressor may include steps:

an inner tube temperature, an inner loop temperature, an outer tube temperature and an outer loop temperature corresponding to a starting-up moment of the air conditioner outdoor unit are obtained; and

the refrigerant circulation state of the air conditioner is determined based on the current change situation of the air conditioner outdoor unit and the current change situation of the air conditioner compressor in a case of determining that a preset temperature difference condition is met based on the inner tube temperature, the inner loop temperature, the outer tube temperature and the outer loop temperature.

The inner tube temperature may be understood as a temperature of a heat exchange tube on an indoor side of the air conditioner, the outer tube temperature may be understood as a temperature of a heat exchange tube on an outdoor side of the air conditioner, the inner loop temperature may be understood as an environment temperature on the indoor side of the air conditioner, and the outer loop temperature may be understood as an environment temperature on the outdoor side of the air conditioner.

In examples of the invention, in order to further improve accuracy of the air conditioner protection, whether the preset temperature difference condition is met may be determined first based on the inner tube temperature, the inner loop temperature, the outer tube temperature and the outer loop temperature corresponding to the starting-up moment of the air conditioner outdoor unit, and then the refrigerant circulation state of the air conditioner is determined based on the current change situation of the air conditioner outdoor unit and the current change situation of the air conditioner compressor in a case of determining that the preset temperature difference condition is met. Thus, accuracy of determining the refrigerant circulation state of the air conditioner may be improved, and then the accuracy of the air conditioner protection is improved.

In some implementations, it may be set that the preset temperature difference condition is determined to be met in a case that an absolute value of a difference value between the inner tube temperature and the inner loop temperature corresponding to the starting-up moment of the air conditioner outdoor unit is less than or equal to a first preset temperature threshold and an absolute value of a difference value between the outer tube temperature and the outer loop temperature corresponding to the starting-up moment of the air conditioner outdoor unit is less than or equal to a second preset temperature threshold.

In some implementations, determining the refrigerant circulation state of the air conditioner based on the current change situation of the air conditioner outdoor unit and the current change situation of the air conditioner compressor in the case of determining that the preset temperature difference condition is met based on the inner tube temperature, the inner loop temperature, the outer tube temperature and the outer loop temperature may include steps:

the refrigerant circulation state of the air conditioner is determined based on the current change situation of the air conditioner outdoor unit and the current change situation of the air conditioner compressor in cases of determining that the preset temperature difference condition is met based on the inner tube temperature, the inner loop temperature, the outer tube temperature and the outer loop temperature and determining that a starting-up duration of the air conditioner compressor reaches an eighth preset duration.

In examples of the invention, in order to further improve accuracy of the air conditioner protection, except that whether the preset temperature difference condition is met may be first determined based on the inner tube temperature, the inner loop temperature, the outer tube temperature and the outer loop temperature corresponding to the starting-up moment of the air conditioner outdoor unit, whether the starting-up duration of the air conditioner compressor reaches the eighth preset duration may be further judged, and it may indicate that the air conditioner compressor meets the conditions of stable running in a case that the starting-up duration of the air conditioner compressor reaches the eighth preset duration.

In some implementations, the eighth preset duration may be 60 seconds.

Fig. 2 is a flowchart of a method for controlling an air conditioner shown according to an example. The method may be performed by an air conditioner outdoor unit. As shown in Fig. 2, the method includes the following steps.

In step S21, a power-on duration parameter sent by an air conditioner indoor unit is received.

In step S22, a power-on duration of the air conditioner indoor unit is determined according to the power-on duration parameter, where the power-on duration parameter is sent continuously within a ninth preset duration after the air conditioner indoor unit is powered on.

In some implementations, the power-on duration parameter may be represented through a preset byte.

In some implementations, after the air conditioner indoor unit is powered on, the power-on duration parameter representing the power-on duration of the indoor unit may be continuously sent to the air conditioner outdoor unit, and thus, the power-on duration parameter sent by the air conditioner indoor unit may be received by the air conditioner outdoor unit.

It may be known with reference to the above content that if there is a case of refrigerant leakage, the refrigerant is substantially leaked completely after exceeding a certain time, if the refrigerant has been leaked completely, occurrence of a fault or even explosion risk is extremely small, so in order to reduce unnecessary detection, in examples of the invention, a duration of sending the power-on duration parameter by the air conditioner indoor unit may be set, for example, the power-on duration parameter may be sent continuously within the ninth preset duration after the air conditioner indoor unit is powered on and is not sent any more when exceeding the ninth preset duration.

In step S23, a refrigerant circulation state of the air conditioner is determined based on a current change situation of the air conditioner outdoor unit and a current change situation of an air conditioner compressor in a case that the power-on duration is less than a first preset duration.

In step S24, an abnormity protection instruction is generated in a case that the refrigerant circulation state is abnormal.

In step S25, the air conditioner compressor is controlled to perform a halt protection based on the abnormity protection instruction.

In examples of the invention, the air conditioner outdoor unit may control the air conditioner compressor, so the air conditioner outdoor unit may control the air conditioner compressor to perform the halt protection based on the abnormity protection instruction after the abnormity protection instruction is generated.

In the above method, given that transmitting data of the air conditioner outdoor unit to the air conditioner indoor unit has a communication delay of about 1 second, and if the method for controlling the air conditioner is performed in the air conditioner indoor unit, control timeliness is reduced, so the air conditioner outdoor unit is set as a master device for performing the method for controlling the air conditioner, and the control timeliness may be improved.

The method for controlling the air conditioner in examples of the invention is described below by taking one complete example.

Byte information representing the power-on duration of the air conditioner indoor unit is sent continuously to the air conditioner outdoor unit by the air conditioner indoor unit after powered on, X minutes is set as the longest, and the byte information is not sent continuously any more when exceeding the X minutes. When a starting-up instruction sent by the air conditioner indoor unit is received by the air conditioner outdoor unit, whether the power-on duration of the air conditioner indoor unit is less than Y minutes is judged through the byte information carried in the starting-up instruction, and if the power-on duration of the air conditioner indoor unit is less than Y minutes, subsequent detection and judgment may be performed.

In examples of the present application, whether the air conditioner indoor unit is powered on for the first time may be determined by the air conditioner outdoor unit through the byte information sent by the air conditioner indoor unit, and if a first power-on condition is met, the subsequent detection and judgment may be performed. Whether the air conditioner indoor unit is powered on for the first time is determined by judging the power-on duration of the indoor unit, one the one hand, given that if there is a case of leakage, the refrigerant is substantially leaked completely after exceeding the power-on duration of the indoor unit, occurrence of the fault or even explosion risk is extremely small, the air conditioner outdoor unit may not perform judgment any more, and on the other hand, a program is easier to write, and whether the air conditioner indoor unit is powered on for the first time does not need to be judged by increasing flag bits of the indoor unit and the outdoor unit, which may be applied to another subsequent function needing to judge first power-on of the air conditioner indoor unit.

A subsequent detection and judgment manner is as follows:

When the inner tube temperature, the inner loop temperature, the outer tube temperature and the outer loop temperature corresponding to the starting-up moment of the air conditioner outdoor unit meet the following (1) and (2) judgment conditions, function judgment is performed.

(1) A temperature difference range between the inner tube temperature and the inner loop temperature corresponding to the starting-up moment: $|T_{inner\ tube}-T_{inner\ loop}|\leq T_{inner}$°C.

(2) A temperature difference range between the outer tube temperature and the outer loop temperature corresponding to the starting-up moment: $|T_{outer\ tube}-T_{outer\ loop}|\leq T_{outer}$°C.

Where $T_{inner}$ represents the first preset temperature threshold, $T_{outer}$ represents the second preset temperature threshold. If an inner and outer loop temperature difference condition and an inner and outer tube temperature difference condition for entering the function judgment are met, the air conditioner compressor is started up for continuous 60 s, and then a continuous sliding window judgment is performed on the running frequency of the air conditioner compressor, the rotation speed of the internal/external fan of the air conditioner and the alternating current voltage of the air conditioner outdoor unit according to the following conditions (3) to (6). Judgment for (3) to (6) is performed mainly considering stable system control, and the influence on the current parameter in cases of frequency increasing and decreasing, gear shift and voltage fluctuation is eliminated.

(3) The fluctuation of the running frequency of the air conditioner compressor within time t1 is within the preset frequency threshold.

(4) The fluctuation of the rotation speed of the internal fan of the air conditioner within time t2 is within the first preset rotation speed threshold.

(5) The fluctuation of the rotation speed of the external fan of the air conditioner within time t3 is within the second preset rotation speed threshold.

(6) The fluctuation of the alternating current voltage of the air conditioner outdoor unit within time t4 is within the preset voltage threshold.

Whether the following conditions (7) and (8) are met continues to be judged if the conditions (3) to (6) are met:

$$(7) \; |I_{outdoor\ unit\ 1} - I_{outdoor\ unit\ 2}| \geq I_{threshold}$$

$$(8) \; |\frac{I_{compressor\ 3}}{I_{compressor\ 4}} - 1| \geq P_{threshold}$$

The refrigerant circulation is judged as abnormal if the conditions (7) and (8) are met, and it enters the halt protection of the air conditioner compressor. A judgment duration of the whole (7) and (8) lasts for a duration t5, a value of t5 is 10 to 30 minutes, and judgment is not performed any more when exceeding t5 unless judgment for first power-on of the air conditioner indoor unit is met, for example, after the air conditioner indoor unit is powered on again.

A fault code may be displayed once the refrigerant circulation is judged as abnormal, the user is warned that there is something wrong with the air conditioner, and in examples of the invention, the refrigerant circulation is judged as abnormal, so it shows that a pipeline has a leakage and a valve is not opened and there is compressed air.

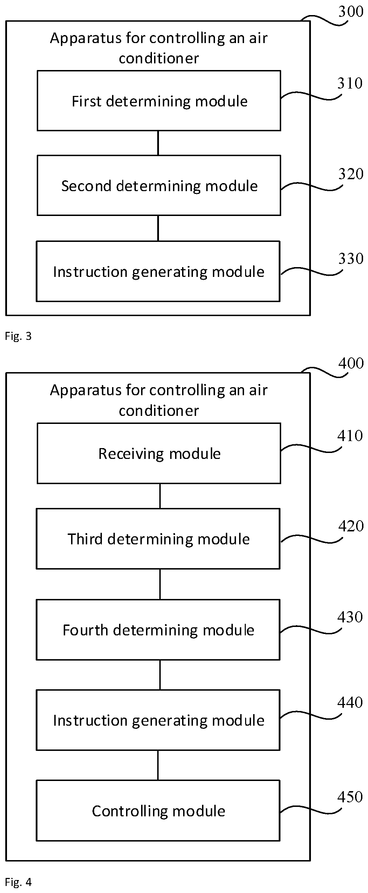

Fig. 3 is a block diagram of an apparatus for controlling an air conditioner shown according to an example. Referring to Fig. 3, the apparatus 300 for controlling the air conditioner includes:

a first determining module 310, configured to determine a power-on duration of an air conditioner indoor unit;

a second determining module 320, configured to determine a refrigerant circulation state of the air conditioner based on a current change situation of an air conditioner outdoor unit and a current change situation of an air conditioner compressor in a case that the power-on duration is less than a first preset duration; and

an instruction generating module 330, configured to generate an abnormity protection instruction in a case that the refrigerant circulation state is abnormal, where the abnormity protection instruction is used to control the air conditioner compressor to perform a halt protection.

Optionally, the second determining module 320 includes:

a first determining sub-module, configured to determine the refrigerant circulation state as abnormal refrigerant circulation in a case that an absolute value of an absolute change value of a current of the air conditioner outdoor unit at a first moment and a second moment is greater than or equal to a preset current threshold and an absolute value of a relative change rate of a current of the compressor at a third moment and a fourth moment is greater than or equal to a preset proportion threshold;

where an interval between the first moment and the second moment is a second preset duration, and an interval between the third moment and the fourth moment is a third preset duration.

Optionally, the second determining module 320 includes:

a second determining sub-module, configured to determine running stability of the air conditioner; and

a third determining sub-module, configured to determine the refrigerant circulation state of the air conditioner based on the current change situation of the air conditioner outdoor unit and the current change situation of the air conditioner compressor in a case that the air conditioner runs stably.

Optionally, the second determining sub-module is further configured to determine that the air conditioner runs stably in a case that a preset condition is met. The preset condition includes the one or more following conditions:

a fluctuation of a running frequency of the air conditioner compressor within a fourth preset duration is less than a preset frequency threshold;

a fluctuation of a rotation speed of an internal fan of the air conditioner within a fifth preset duration is less than a first preset rotation speed threshold;

a fluctuation of a rotation speed of an external fan of the air conditioner within a sixth preset duration is less than a second preset rotation speed threshold; or

a fluctuation of a variation range of an alternating current voltage of the air conditioner outdoor unit within a seventh preset duration is less than a preset voltage threshold.

Optionally, the second determining module 320 includes:

an obtaining sub-module, configured to obtain an inner tube temperature, an inner loop temperature, an outer tube temperature and an outer loop temperature corresponding to a starting-up moment of the air conditioner outdoor unit; and

a fourth determining sub-module, configured to determine the refrigerant circulation state of the air conditioner based on the current change situation of the air conditioner outdoor unit and the current change situation of the air conditioner compressor in a case of determining that a preset temperature difference condition is met based on the inner tube temperature, the inner loop temperature, the outer tube temperature and the outer loop temperature.

Optionally, the fourth determining sub-module is further configured to determine the refrigerant circulation state of the air conditioner based on the current change situation of the air conditioner outdoor unit and the current change situation of the air conditioner compressor in cases of determining that the preset temperature difference condition is met based on the inner tube temperature, the inner loop temperature, the outer tube temperature and the outer loop temperature and determining that a starting-up duration of the air conditioner compressor reaches an eighth preset duration.

Fig. 4 is a block diagram of an apparatus for controlling an air conditioner shown according to an example. Referring to Fig. 4, the apparatus 400 for controlling the air conditioner includes:

a receiving module 410, configured to receive a power-on duration parameter sent by an air conditioner indoor unit;

a third determining module 420, configured to determine a power-on duration of the air conditioner indoor unit according to the power-on duration parameter, where the power-on duration parameter is sent continuously within a ninth preset duration after the air conditioner indoor unit is powered on;

a fourth determining module 430, configured to determine a refrigerant circulation state of the air conditioner based on a current change situation of an air conditioner outdoor unit and a current change situation of an air conditioner compressor in a case that the power-on duration is less than a first preset duration;

an instruction generating module 440, configured to generate an abnormity protection instruction in a case that the refrigerant circulation state is abnormal; and

a controlling module 450, configured to control the air conditioner compressor to perform a halt protection based on the abnormity protection instruction.

As for the apparatus in the above examples, a specific mode of each module for performing an operation has been described in detail in the examples related to the method, which is not described in detail here.

The invention further provides a computer-readable storage medium, storing a computer program instruction, and the program instruction, when executed by a processor, implements the above method for controlling the air conditioner.

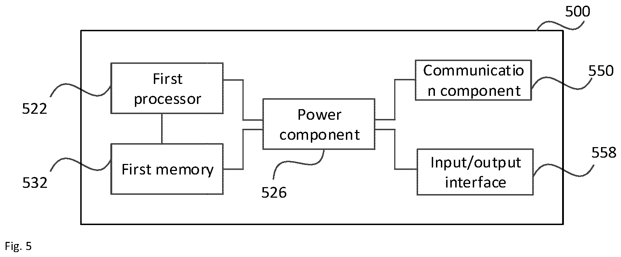

Fig. 5 is a block diagram of an electronic device 500 shown according to an example. For example, the electronic device 500 may be provided as any one of an air conditioner outdoor unit, an air conditioner indoor unit or a smart gateway. Referring to Fig. 5, the electronic device 500 includes one or more first processors 522, and a first memory 532 configured to store a computer program executable by the first processor 522. The computer program stored in the first memory 532 may include one or more than one module each of which corresponds to a set of instructions. Besides, the first processor 522 may be configured to execute the computer program so as to execute the above method for controlling the air conditioner.

Besides, the electronic device 500 may further include a power component 526 and a communication component 550, the power component 526 may be configured to execute power management of the electronic device 500, and the communication component 550 may be configured to implement communication of the electronic device 500, for example, wired or wireless communication. Besides, the electronic device 500 may further include an input/output (I/O) interface 558.

In another example, a computer-readable storage medium including program instructions is further provided, and the program instructions, when executed by a processor, cause the processor to implement steps of the above method for controlling the air conditioner. For example, the computer-readable storage medium may be the above first memory 532 including the program instructions, and the above program instructions may be executed by the first processor 522 of the electronic device 500 so as to complete the above method for controlling the air conditioner.

In another example, an air conditioner is provided and includes an air conditioner outdoor unit, and the air conditioner outdoor unit includes:

a second processor; and

a second memory configured to store an instruction executable by the second processor;

where the second processor is configured to implement the above method for controlling the air conditioner during performing.

In another example, a computer program product is further provided, the computer program product includes a computer program capable of being executed by a programmable apparatus, and the computer program has a code part which is used for performing, when executed by the programmable apparatus, the above method for controlling the air conditioner.

**Claims**

1. A method for controlling an air conditioner, comprising:

   determining (S11) a power-on duration of an air conditioner indoor unit;
   determining (S12) a refrigerant circulation state of the air conditioner based on a current change situation of an air conditioner outdoor unit and a current change situation of an air conditioner compressor in a case that the power-on duration is less than a first preset duration; and
   generating (S13) an abnormity protection instruction in a case that the refrigerant circulation state is abnormal, wherein the abnormity protection instruction is used to control the air conditioner compressor to perform a halt protection.

2. The method according to claim 1, wherein determining (S12) the refrigerant circulation state of the air conditioner based on the current change situation of the air conditioner outdoor unit and the current change situation of the air conditioner compressor comprises:

   determining the refrigerant circulation state as abnormal refrigerant circulation in a case that an absolute value of an absolute change value of a current of the air conditioner outdoor unit at a first moment and a second moment is greater than or equal to a preset current threshold and an absolute value of a relative change rate of a current of the compressor at a third moment and a fourth moment is greater than or equal to a preset proportion threshold;

   wherein an interval between the first moment and the second moment is a second preset duration, and an interval between the third moment and the fourth moment is a third preset duration.

3. The method according to claims 1 or 2, wherein determining (S12) the refrigerant circulation state of the air conditioner based on the current change situation of the air conditioner outdoor unit and the current change situation of the air conditioner compressor comprises:

   determining running stability of the air conditioner; and
   determining the refrigerant circulation state of the air conditioner based on the current change situation of the air conditioner outdoor unit and the current change situation of the air conditioner compressor in a case that the air conditioner runs stably.

4. The method according to claim 3, wherein determining the running stability of the air conditioner comprises:

   determining that the air conditioner runs stably in a case that a preset condition is met;
   wherein the preset condition comprises at least one of:

   a fluctuation of a running frequency of the air conditioner compressor within a fourth preset duration is less than a preset frequency threshold;
   a fluctuation of a rotation speed of an internal fan of the air conditioner within a fifth preset duration is less than a first preset rotation speed threshold;
   a fluctuation of a rotation speed of an external fan of the air conditioner within a sixth preset duration is less than a second preset rotation speed threshold; or
   a fluctuation of a variation range of an alternating current voltage of the air conditioner outdoor unit within a seventh preset duration is less than a preset voltage threshold.

5. The method according to any one of claims 1-4, wherein determining (S12) the refrigerant circulation state of the air conditioner based on the current change situation of the air conditioner outdoor unit and the current change situation of the air conditioner compressor comprises:

   obtaining an inner tube temperature, an inner loop temperature, an outer tube temperature and

an outer loop temperature corresponding to a starting-up moment of the air conditioner outdoor unit; and

determining the refrigerant circulation state of the air conditioner based on the current change situation of the air conditioner outdoor unit and the current change situation of the air conditioner compressor in a case of determining that a preset temperature difference condition is met based on the inner tube temperature, the inner loop temperature, the outer tube temperature and the outer loop temperature.

6. The method according to claim 5, wherein determining the refrigerant circulation state of the air conditioner based on the current change situation of the air conditioner outdoor unit and the current change situation of the air conditioner compressor in the case of determining that the preset temperature difference condition is met based on the inner tube temperature, the inner loop temperature, the outer tube temperature and the outer loop temperature comprises:

determining the refrigerant circulation state of the air conditioner based on the current change situation of the air conditioner outdoor unit and the current change situation of the air conditioner compressor in cases of determining that the preset temperature difference condition is met based on the inner tube temperature, the inner loop temperature, the outer tube temperature and the outer loop temperature and determining that a starting-up duration of the air conditioner compressor reaches an eighth preset duration.

7. A method for controlling an air conditioner, performed by an air conditioner outdoor unit, comprising:

receiving (S21) a power-on duration parameter sent by an air conditioner indoor unit;

determining (S22) a power-on duration of the air conditioner indoor unit according to the power-on duration parameter, wherein the power-on duration parameter is sent continuously within a ninth preset duration after the air conditioner indoor unit is powered on;

determining (S23) a refrigerant circulation state of the air conditioner based on a current change situation of the air conditioner outdoor unit and a current change situation of an air conditioner compressor in a case that the power-on duration is less than a first preset duration;

generating (S24) an abnormity protection instruction in a case that the refrigerant circulation state is abnormal; and

controlling (S25) the air conditioner compressor to perform a halt protection based on the abnormity protection instruction.

8. An apparatus (300) for controlling an air conditioner, comprising:

a first determining module (310), configured to determine a power-on duration of an air conditioner indoor unit;

a second determining module (320), configured to determine a refrigerant circulation state of the air conditioner based on a current change situation of an air conditioner outdoor unit and a current change situation of an air conditioner compressor in a case that the power-on duration is less than a first preset duration; and

an instruction generating module (330), configured to generate an abnormity protection instruction in a case that the refrigerant circulation state is abnormal, wherein the abnormity protection instruction is used to control the air conditioner compressor to perform a halt protection.

9. The apparatus (300) for controlling an air conditioner according to claim 8, wherein the second determining module (320) comprises:

a first determining sub-module, configured to determine the refrigerant circulation state as abnormal refrigerant circulation in a case that an absolute value of an absolute change value of a current of the air conditioner outdoor unit at a first moment and a second moment is greater than or equal to a preset current threshold and an absolute value of a relative change rate of a current of the compressor at a third moment and a fourth moment is greater than or equal to a preset proportion threshold;

wherein an interval between the first moment and the second moment is a second preset duration, and an interval between the third moment and the fourth moment is a third preset duration.

10. The apparatus (300) for controlling an air conditioner according to claims 8 or 9, wherein the second determining module (320) comprises:

a second determining sub-module, configured to determine running stability of the air conditioner; and

a third determining sub-module, configured to determine the refrigerant circulation state of the air conditioner based on the current change situation of the air conditioner outdoor unit and the current change situation of the air conditioner compressor in a case that the air conditioner runs stably.

**11.** The apparatus (300) for controlling an air conditioner according to claim 10, wherein the second determining sub-module is further configured to determine that the air conditioner runs stably in a case that a preset condition is met;

wherein the preset condition comprises at least one of:

a fluctuation of a running frequency of the air conditioner compressor within a fourth preset duration is less than a preset frequency threshold;

a fluctuation of a rotation speed of an internal fan of the air conditioner within a fifth preset duration is less than a first preset rotation speed threshold;

a fluctuation of a rotation speed of an external fan of the air conditioner within a sixth preset duration is less than a second preset rotation speed threshold; or

a fluctuation of a variation range of an alternating current voltage of the air conditioner outdoor unit within a seventh preset duration is less than a preset voltage threshold.

**12.** The apparatus (300) for controlling an air conditioner according to any one of claims 8-11, wherein the second determining module (320) comprises:

an obtaining sub-module, configured to obtain an inner tube temperature, an inner loop temperature, an outer tube temperature and an outer loop temperature corresponding to a starting-up moment of the air conditioner outdoor unit; and

a fourth determining sub-module, configured to determine the refrigerant circulation state of the air conditioner based on the current change situation of the air conditioner outdoor unit and the current change situation of the air conditioner compressor in a case of determining that a preset temperature difference condition is met based on the inner tube temperature, the inner loop temperature, the outer tube temperature and the outer loop temperature.

**13.** An apparatus (400) for controlling an air conditioner, comprising:

a receiving module (410), configured to receive a power-on duration parameter sent by an air conditioner indoor unit;

a third determining module (420), configured to determine a power-on duration of the air conditioner indoor unit according to the power-on duration parameter, wherein the power-on duration parameter is sent continuously within a ninth preset duration after the air conditioner indoor unit is powered on;

a fourth determining module (430), configured to determine a refrigerant circulation state of the air conditioner based on a current change situation of an air conditioner outdoor unit and a current change situation of an air conditioner compressor in a case that the power-on duration is less than a first preset duration;

an instruction generating module (440), configured to generate an abnormity protection instruction in a case that the refrigerant circulation state is abnormal; and

a controlling module (450), configured to control the air conditioner compressor to perform a halt protection based on the abnormity protection instruction.

**14.** A non-transitory computer-readable storage medium, storing one or more programs configured to be executed by one or more processors of a processing device, the one or more programs including instructions which, when executed by the processing device, cause the processing device to carry out the method for controlling the air conditioner according to any one of claims 1 to 6, or the method for controlling the air conditioner according to claim 7.

**15.** A computer program product, comprising instructions which, when executed on at least one processor of a processing device, cause the processing device to carry out the method for controlling the air conditioner according to any one of claims 1 to 6, or the method for controlling the air conditioner according to claim 7.

Determine a power-on duration of an air conditioner indoor unit — S11

Determine a refrigerant circulation state of an air conditioner based on a current change situation of an air conditioner outdoor unit and a current change situation of an air conditioner compressor in a case that the power-on duration is less than a first preset duration — S12

Generate an abnormity protection instruction in a case that the refrigerant circulation state of the air conditioner is abnormal, where the abnormity protection instruction is used to control the air conditioner compressor to perform a halt protection — S13

Fig. 1

Receive a power-on duration parameter sent by an air conditioner indoor unit — S21

Determine a power-on duration of the air conditioner indoor unit according to the power-on duration parameter, where the power-on duration parameter is sent continuously within a ninth preset duration after the air conditioner indoor unit is powered on — S22

Determine a refrigerant circulation state of an air conditioner based on a current change situation of an air conditioner outdoor unit and a current change situation of an air conditioner compressor in a case that the power-on duration is less than a first preset duration — S23

Generate an abnormity protection instruction in a case that the refrigerant circulation state of the air conditioner is abnormal — S24

Control the air conditioner compressor to perform a halt protection based on the abnormity protection instruction — S25

Fig. 2

Fig. 3

Fig. 4

Fig. 5

## EUROPEAN SEARCH REPORT

**Application Number**

EP 24 21 2911

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 103 597 292 B (ARENSMEIER JEFFREY N) 18 May 2016 (2016-05-18) * paragraphs [0055], [0058], [0157], [0059], [0060], [0063], [0109] – [0111], [0114]; claim 3; figures * ----- | 1-15 | INV. F25B49/00 |
| A | JP 4 176301 B2 (TOSHIBA CARRIER KK) 5 November 2008 (2008-11-05) * the whole document * ----- | 1-15 | |

**TECHNICAL FIELDS SEARCHED (IPC)**

F25B

The present search report has been drawn up for all claims

| Place of search | Date of completion of the search | Examiner |
|---|---|---|
| Munich | 24 April 2025 | Ritter, Christoph |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
.................................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 24 21 2911

This annex lists the patent family members relating to the patent documents cited in the above-mentioned European search report.
The members are as contained in the European Patent Office EDP file on
The European Patent Office is in no way liable for these particulars which are merely given for the purpose of information.

24-04-2025

| Patent document cited in search report | | Publication date | Patent family member(s) | | Publication date |
|---|---|---|---|---|---|
| CN 103597292 | B | 18-05-2016 | AU | 2012223466 A1 | 29-08-2013 |
| | | | CA | 2828740 A1 | 07-09-2012 |
| | | | CA | 2934860 A1 | 07-09-2012 |
| | | | CN | 103597292 A | 19-02-2014 |
| | | | CN | 105910247 A | 31-08-2016 |
| | | | EP | 2681497 A2 | 08-01-2014 |
| | | | US | 2012221150 A1 | 30-08-2012 |
| | | | US | 2014297208 A1 | 02-10-2014 |
| | | | US | 2017308072 A1 | 26-10-2017 |
| | | | US | 2019212722 A1 | 11-07-2019 |
| | | | WO | 2012118830 A2 | 07-09-2012 |
| JP 4176301 | B2 | 05-11-2008 | JP | 4176301 B2 | 05-11-2008 |
| | | | JP | 2002130875 A | 09-05-2002 |

EPO FORM P0459

For more details about this annex : see Official Journal of the European Patent Office, No. 12/82